# EUROPEAN PATENT APPLICATION

(11) **EP 1 623 770 A2**
(43) Date of publication of application: **08.02.2006**
(21) Application number: 05254901.1
(22) Date of filing: 05.08.2005
(51) Int. Cl.: B05C 17/005

(54) **Dispensing gun**

(30) Priority: 06.08.2004 GB 0417593
(71) Applicant: P.C. Cox Limited, Newbury, Berkshire, RG13 2QR (GB)
(72) Inventor: Beckett, Clifford, Thatcham Berks RG18 3DT (GB); Leech, Andrew, Newbury Berks RG20 8BT (GB)
(74) Representative: Hale, Peter

(57) **Abstract**

A dispensing gun has an interchangeable breech (12) by which different double barrel cartridges can be loaded and used within the same apparatus. The breech (12) is demountable from the gun so that different cartridge holding breeches (12) may be fitted to the same gun.

## Description

This invention relates to dispensing guns for dispensing viscous materials. The invention is particularly applicable to a dispensing gun for a double-barrelled cartridge.

In some applications of dispensing guns, such as in dental work, there is frequently a need to dispense simultaneously two viscous materials that are mixed during the dispensing process such that a chemical reaction takes place during dispensing of the mixture by which it cures, for example. The binary components are stored separately in cartridge barrels to prevent the chemical reaction occurring. The gun is typically mechanically driven, but in some applications can be electrically or pneumatically powered.

Commercially available double-barrelled cartridges for such binary products are made of a plastics material and have a rectangular rear retaining flange which is inserted into a slot at the dispensing end of the dispensing gun. By actuating a trigger lever, a double plunger is driven into the cartridge barrels. The viscous materials are expelled through an outlet by a piston in each barrel against which the plungers push. The dispensing force used to move the pistons forward can lead to high mechanical stresses on the retaining flange, and/or radial expansion of each barrel due to the pressures created in the barrels.

In a typical dispensing gun for a double-barrelled cartridge, the slot into which the flange of the cartridge is inserted engages the flange of the cartridge on three sides. The mechanical stresses imposed on the partially supported flange can cause relative movement of the barrels out of their proper alignment. This increases mechanical wear on the cartridge, the cartridge flange and the slot holding the flange. It also makes the dispensing process harder to perform.

This problem is addressed by EP-A-0543776, which discloses a securing flap engaging the fourth side of the cartridge flange, thus providing additional restraint on the cartridge flange.

The correct use of such binary products requires that they are mixed in the right ratios. Thus, such dispensing gun cartridges are available in ranges of barrel diameter ratios, for example 1:1, 2:1, 4:1 1 and 10:1. If the barrel plungers are moved at the same speed the volumetric ratio of the dispensed compounds will be in accordance with the ratio of the cartridge diameters. When a user needs to use different binary products, it is convenient for the same gun to be able to accept different cartridge ratios. However, this mitigates against the solutions for retaining the flange as the engagement between the flange and the slot cannot be equally intimate for all cartridges.

In general, the flange has to fit the slot to provide the necessary restraint. This limits the interchangeability of cartridges and guns. The retaining flap of EP-A-0543776 only further restricts this.

In dental and other low volume uses of binary products, it is typical that a user will want to use small amounts and will be changing between mixtures relatively frequently. While it is possible to have an array of dedicated dispensing guns, this has obvious cost implications.

Aspects of the invention are set out in the independent claims and additional optional features are set out in the dependent claims.

Embodiments of the invention use a demountable cartridge holder that will allow the same gun to be used to dispense different materials from differently sized cartridges by changing the holder without dismantling any part of the rest of the gun.

Embodiments of the invention support the cartridge using a removable breech enclosing the cartridge. In addition to being shaped to provide all-round support for the cartridge flange, the breech can also support the barrel of a single-barrelled cartridge and/or a range of double-barrelled cartridges. By providing a gun with interchangeable breeches, the same stock portion of the dispensing gun may be used with a variety of cartridges by coupling the appropriate breech.

In a preferred embodiment, the cartridge holder is adjusted to hold more than one ratio of double-barrelled cartridges so that the cartridges are interchangeable within the holder as well.

The invention can be put into practice in various ways, some of which will now be described by way of example with reference to the accompanying drawings, in which:
Figure 1A shows a dispensing gun according to an embodiment with the breech in a closed position;
Figure1B shows a cut-away view of the dispensing gun of Figure 1A;
Figure 1C shows a dispensing gun of Figure 1A with the breech pivoted open for cartridge insertion;
Figure 1D shows the dispensing gun of Figure 1A with a cartridge inserted;
Figure 2A shows a perspective view of a breech of a gun;
Figure 2B shows a cross-section of part of the dispensing gun of Figure 2A;
Figures 3A-D show a breech loading process;
Figures 4A-C show a breech removal process;
Figures 5A-C show cartridge and its breech; and
Figures 6A-C show another cartridge and its breech;
Figures 7A and B show the cartridges and the corresponding plungers.

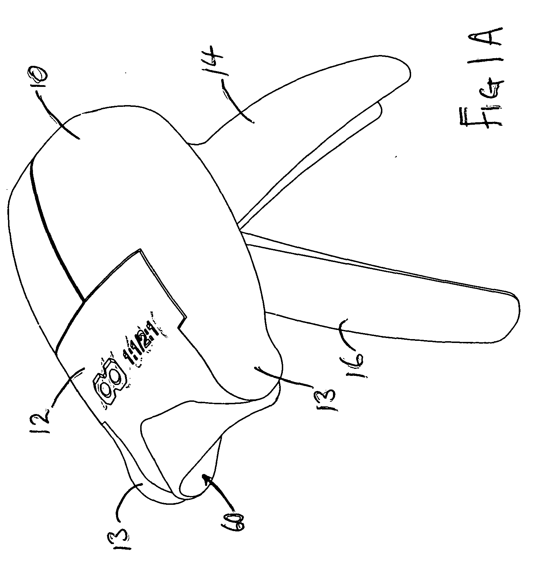

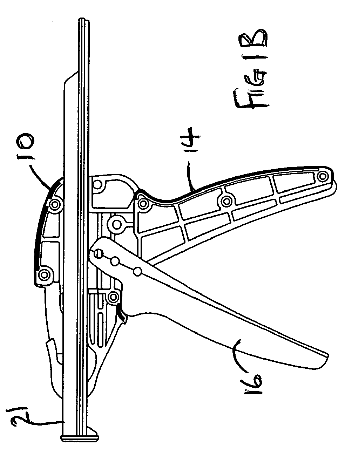

Figures 1A to D show a dispensing gun which comprises a stock portion 10, a breech 12 pivotably mounted between side arms 13 of the stock, a handle 14 depending from a lower rear part of the stock, and a trigger lever 16 in front of the handle which is pivotably mounted inside the body of the stock 10. In this embodiment most of the components of the gun are made from a rigid plastics material such as a glass reinforced plastic.

A double cartridge 18 which comprises a pair of parallel barrels 20 can be inserted into the breech 12. To do this, the breech 12 is rocked about its pivot from a closed position (see Figure 1A) to an open position (see Figure 1C). In the open position the breech is hinged forwardly so that its front end is facing downwards and the rear of the breech is open to receive the cartridge. The cartridge is inserted through the rear of the open breech so that it is held in position in the breech, whereby the breech can be rocked back into the closed position with the cartridge then extending forwards from the gun. In this position, the cartridge barrels 20 are aligned with a pair of forward facing plungers 21 mounted in the stock which are driven by a ratchet mechanism connected with the trigger lever 16. By squeezing the trigger lever 16 the plungers 21 are advanced into the rear of the cartridge barrels 20 to engage the conventional piston devices in each to drive the viscous material in the barrels out of their respective outlets 22. While not shown in Figure 1, the cartridge is normally fitted with a detachable mixer in use. The binary materials making up the viscous mixture are forced into the mixer where they are mixed before being dispensed through a single nozzle.

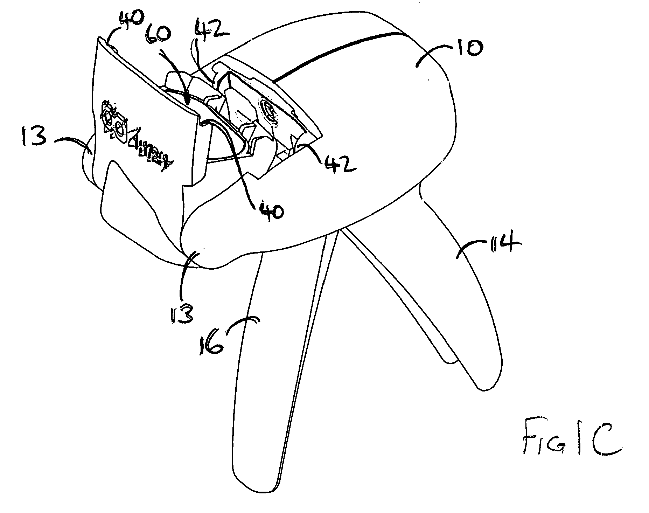

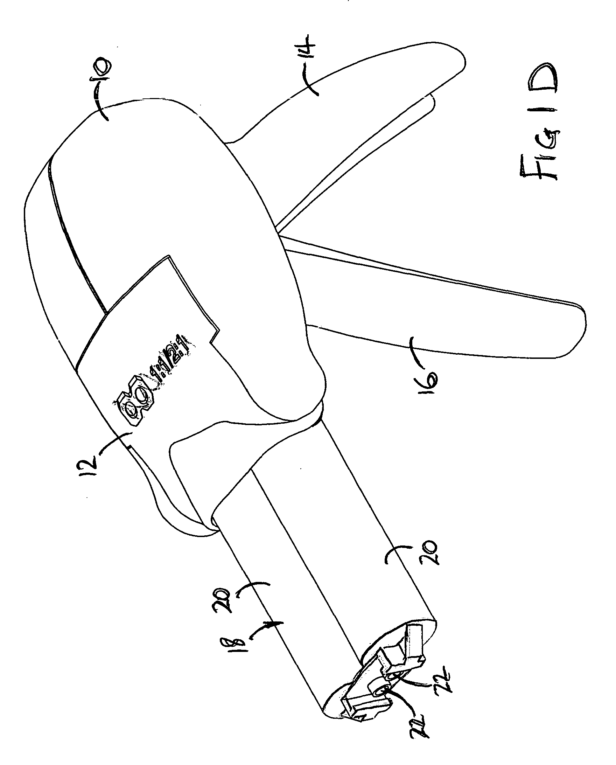

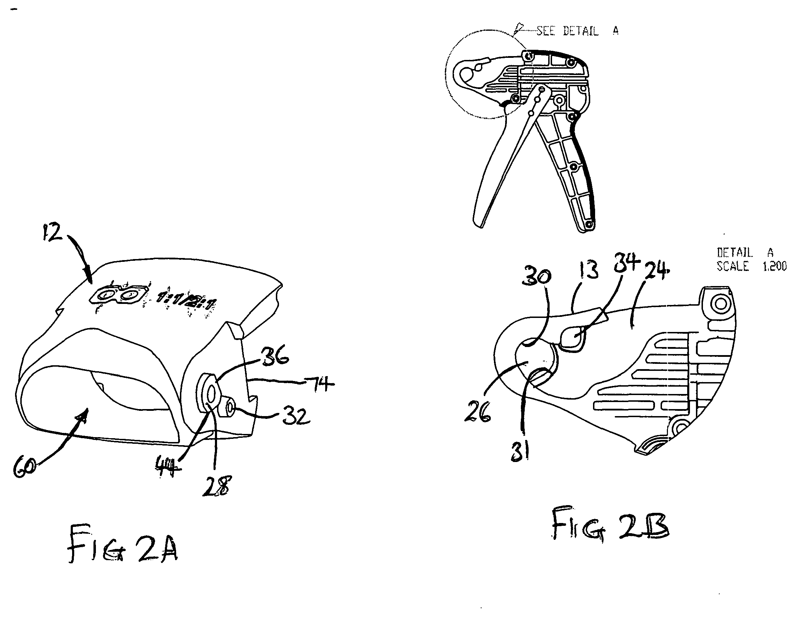

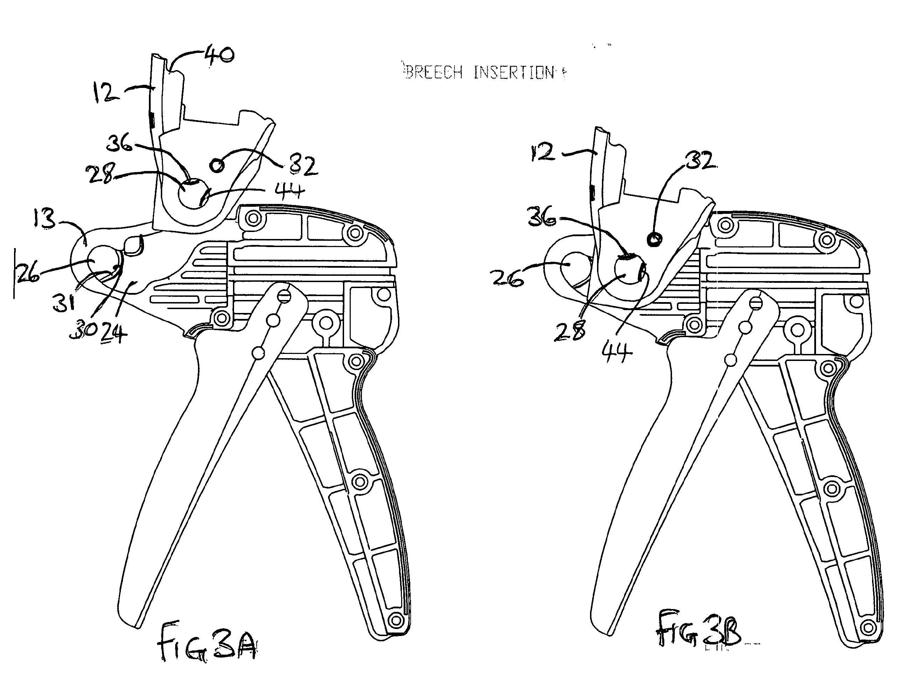

Referring to Figures 2A and B, the breech 12 of the gun is shown removed from the stock 10. According to this embodiment the stock 10 is designed for breeches for different ratios of cartridge barrels. Each breech is mountable in the same stock. The breech must be securely held in place in the stock when the gun is being used, but it is also necessary that the breech can relatively easily be removed but preferably without a tendency for it to become disengaged completely from the rest of the gun when the breech is being opened simply to remove and/or insert a cartridge.

Each side arm 13 of the stock 10 defines an internal channel 24 which starts at an open upper part on the inside of the arm 13, and follows a descending forward path towards a recess 26. Each recess 26 is engaged by a circular boss 28 on each corresponding side of the breech 12. To mount the breech between the arms 13, the breech is presented facing downwards with the bosses 28 above the openings in the channels 24. The bosses travel along the channels from the open ends. Each recess 26 is defined by a relatively deeper retaining wall 30 except in the region where the recess communicates with the channel. In this area between the two, the recess is thus relatively shallower, defining a low ridge 31 between the recess and the channel. A secondary boss 32 is positioned on each side of the breech below and to the rear of each main boss 28. A similar recess 34 in the channel is arranged above and behind each main recess 26. The similar recesses 34 define a "home" position for the secondary bosses 32 in the open position of the breech in which cartridges can be removed and inserted into the breech. In the loaded or closed position of the breech, the secondary bosses reside in the channels 24.

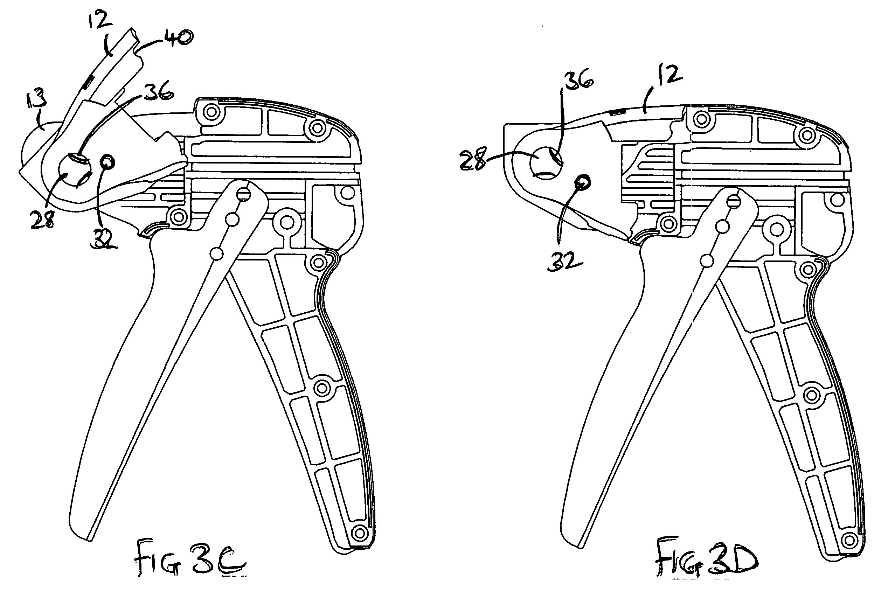

Referring to Figures 3A-D, more detail on inserting the breech 12 is shown. It is arranged facing downwards above the two arms 13 of stock with the main bosses 28 above the openings in the respective channels 24. The breech 12 is lowered so that the main bosses each follow along the channel 24 to the edge of the ridge 31 of the retaining wall 30. An edge of each main boss 28 is formed with a chamfer 36 which, in the position of the breech shown in Figure 3C, engages the outer edge of the ridge 31 and enables the boss to ride over the ridge to mate with the corresponding recess 26. The higher retaining walls of the recesses 26 securely hold the bosses 28 in place against the dispensing force of the plungers. The breech is closed by rotating it about the main bosses which are now fully engaged in the recesses 26 in the arms. Rotating the breech between the open and closed positions allows the secondary bosses to ride in the channel 24.

As shown in Figure 1C, a detent 40 on the rear of the breech engages with a nose 42 on a facing wall of the stock to provide positive snap fit for the breech in the loaded position. This detail is omitted from Figures 3A-D for the sake of clarity. In this embodiment, the detent 40 is formed on a separate insert 43 which is mounted in the stock. The insert provides the required flexibility for securely holding the breech in the loaded position.

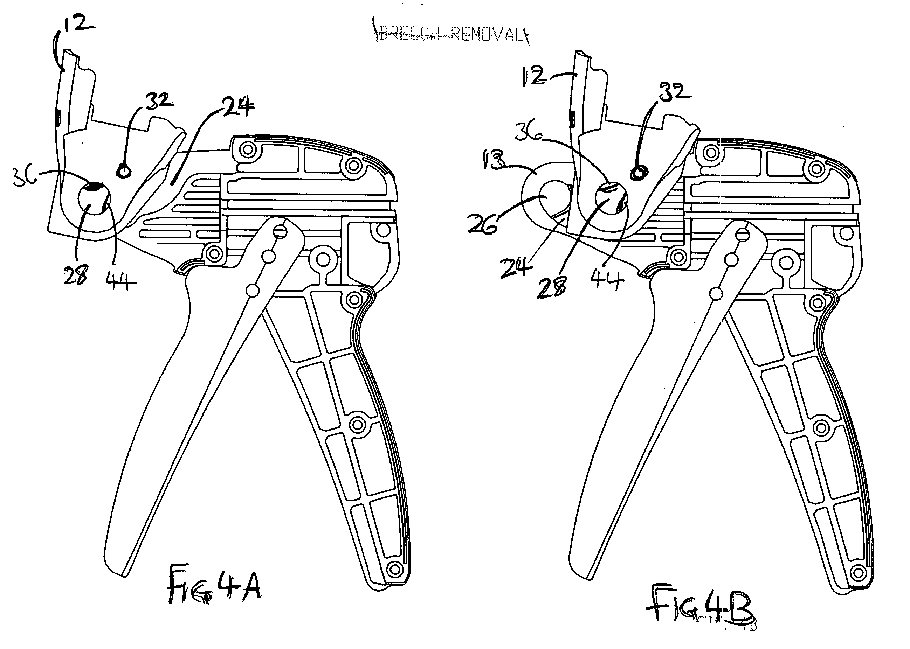

It will be seen that the secondary bosses 32 lie in respective channels 24 when the breech 12 is in the loaded position. Referring to Figures 4A-C, to remove the breech it is necessary for the main bosses 28 to ride back over the respective ridges 31. The secondary bosses 32 provide a controlled means of disengaging the breech. By rotating the breech in the opposite direction about the main bosses to remove it, the secondary bosses travel upwards and into their respective recesses 34 as the breech pivots about the main bosses 28.

Continued rotation of the breech now takes place about the secondary bosses 32, causing each main boss to ride over the ridge by virtue a further chamfer 44 on each main boss which is in registry with the shallower ridges 31 in this orientation of the breech. The effect is to transfer the pivot point for the breech from the main bosses to the secondary bosses, thereby urging the main bosses to ride out of their respective recesses and into the channel for removal of the breech.

In this embodiment, different breeches are provided for dispensing different ratios of binary viscous materials. Each is adjusted to be fitted to the stock in the same way, as described above.

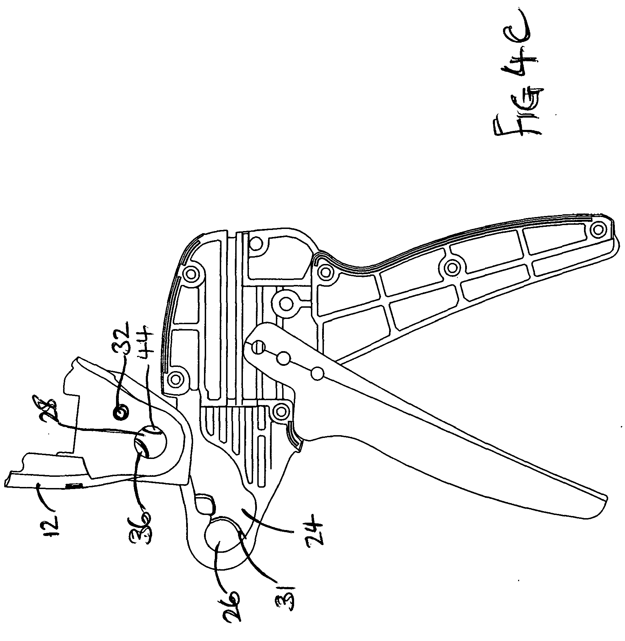

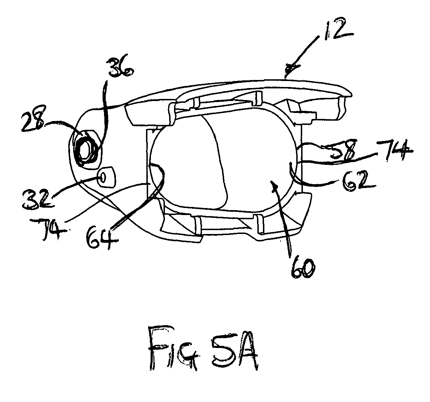

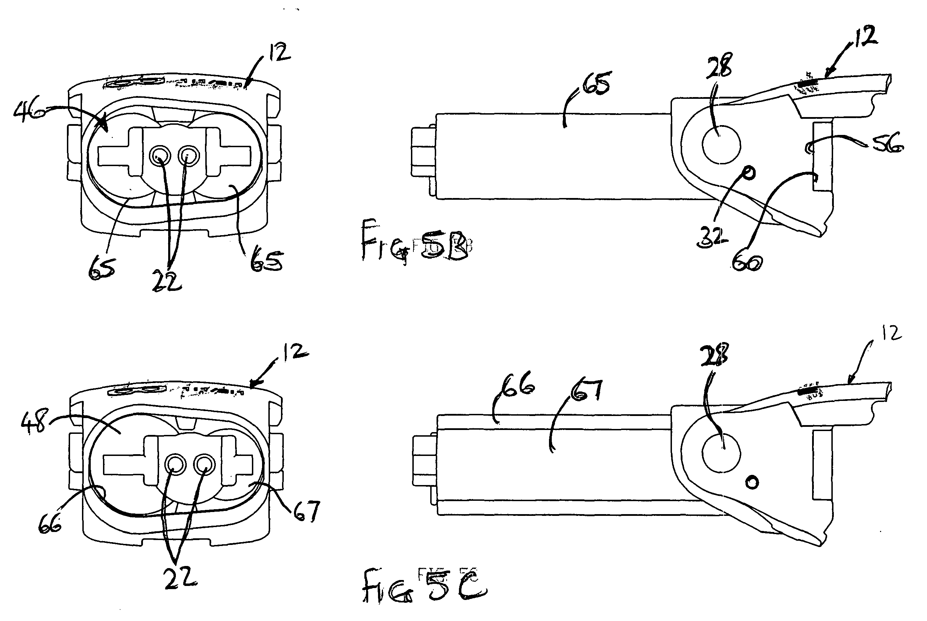

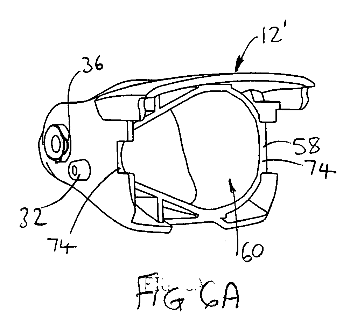

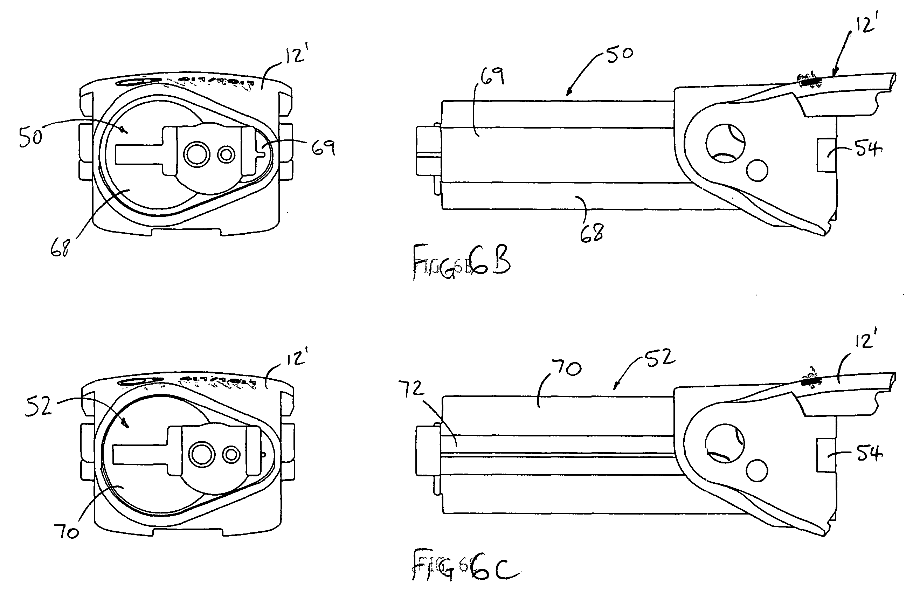

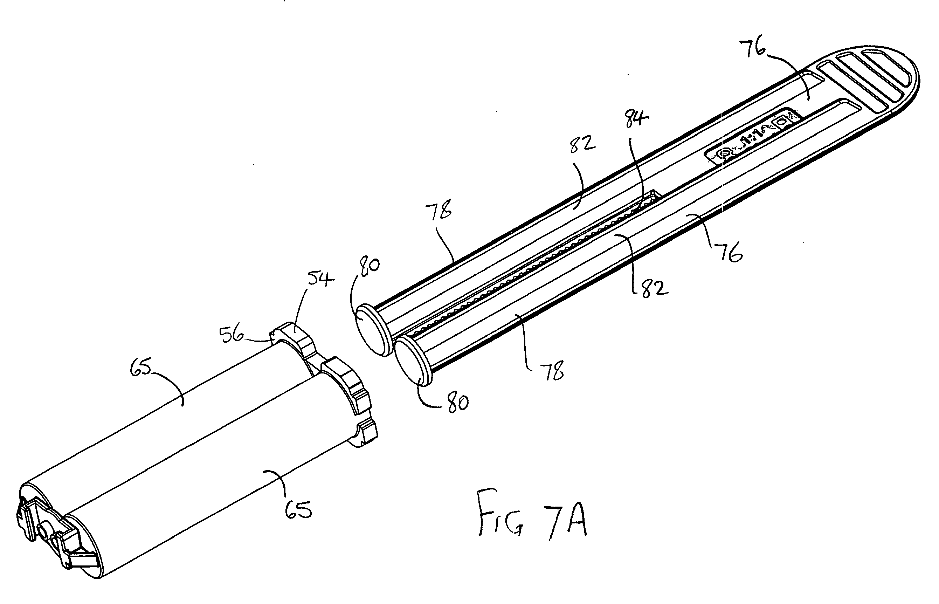

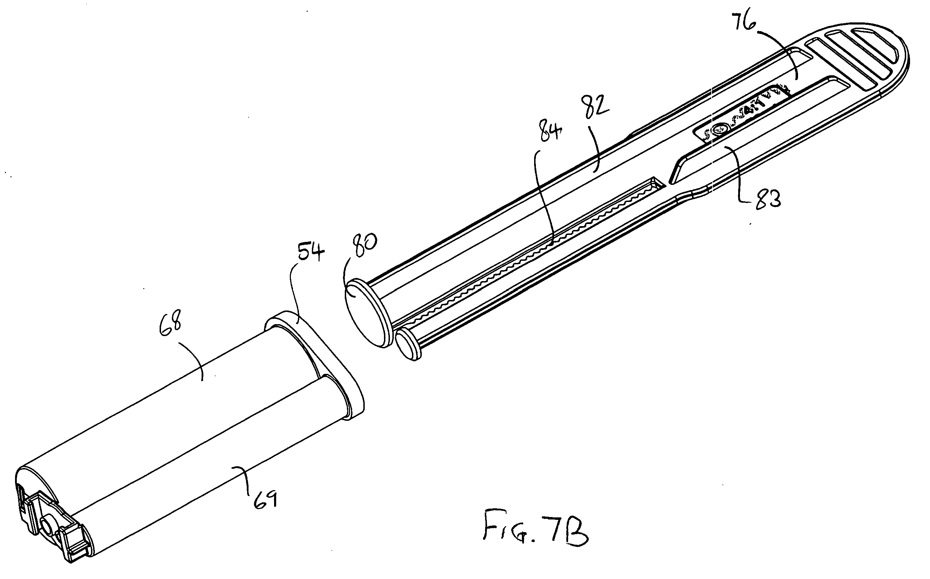

To account for the need for the same dispensing gun to handle different ratios of binary cartridge ingredients this embodiment also allows differently sized breeches to be used in the same stock. Figure 5A shows a first breech 12 which is able to carry 1:1 and 2:1 ratio cartridges 46/48. The barrels of the different cartridges are arranged to have substantially the same overall lateral extent, i.e. the diameters of the barrels, and any gap between them, add up to substantially the same dimension. Figure 5B shows a breech holding a 1:1 cartridge 46. Figure 5C shows the same breech holding the 2:1 cartridge 48. Figure 6A-C show an alternative breech 12¹ holding 4:1 and 10:1 cartridges 50/52. It will be noted that the outlet ports of the cartridges are not in the same place in each case due to the lateral dimensions of the cartridge barrels. Thus, it is also necessary to change the plunger for suitable plunger spacing to suit the cartridge ratios used. Cartridge and plunger combinations for 1:1 and 4:1 1 ratios are shown in Figures 7A and B.

Each cartridge has a rear retaining flange 54 which defines a planar front surface 56 which engages a corresponding planar surface 58 of the breech defining the rear of an aperture 60 through which the cartridge extends (see Figures 5A and 6A). The aperture 60 has a first lateral side 62 which is arcuate, defining a relatively larger radius than a second arcuate opposite side 64. It will be seen from Figure 5B that the 1:1 cartridge has equally sized barrels 65 in which the outer radius of one is substantially the same as that of the second arcuate side 64 of the breech. The cartridge substantially spans the lateral dimensions of the breech aperture. Figure 5C shows the same breech 12 loaded with a 2:1 cartridge. In this case the larger barrel 66 conforms to the dimensions of the larger radiussed side 62 of the breech. The smaller barrel 67 has a smaller radius than the second side 64 of the aperture 60, but is arranged to occupy the same lateral dimension of the aperture 60. In both cases, the front surface 56 of the retaining flange 54 is engaged with the planar surface on the outer periphery of the aperture 60.

With the breech and the 4:1 cartridge 50 shown in Figure 6B each lateral side of both of the cartridge barrels 68/69 conforms to the radius of a corresponding surface of the breech 12¹. The 10:1 cartridge 52 has one barrel 70 which is of the same diameter as the larger barrel of the 4:1 cartridge 50 and a correspondingly smaller other barrel 72. The 10:1 cartridge does not extend across the entire lateral dimension of the aperture. In all cases, but particularly for the 10:1 cartridge, the correct orientation of the cartridge in the breech is determined by a cut-away 74 in each lateral side of the wall defining the aperture 60. It will be seen that this accommodates a side portion of the retaining flange 54.

Different plungers are illustrated in Figures 7A and B. Each comprises a main plate part 76 which defines two plunger rods 78. A plunger head 80 is formed at the forward end of each rod. A stiffening web 82 extends along an upper side of each rod 78 and is continued along the common part of the plate 76 in each case. However, it will be noted in Figure 7B that the stiffening web for the 4:1 cartridge plunger has a stiffening web for the smaller plunger rod that does not extend onto the rod due to its size. A set of rear facing ratchet teeth 84 is formed on the lower side of each plunger. These teeth extend along each plunger rod rearwardly and continue along the common part of the plate 76.

The plunger is inserted into the stock 10 of the gun through the front, between the arms 13, usually when the breech is removed. The teeth 84 ride over a drive pawl (not shown) which is pivotably mounted on the upper end of the trigger lever 16. The pawl has one or two teeth, but could have more than two teeth. The pawl teeth are biased into engagement with the plunger teeth by a spring (not shown). To remove the pawl teeth from engagement with the plunger, a release lever is arranged behind the handle 14. By pressing on the lever, the pawl teeth are pivoted downwards out of the way of the plunger teeth. The mutually engaging teeth on the plunger and the pawl are of a conventional construction well understood by the skilled person. They form the means for advancing the plunger rods into the rear of the barrels of the loaded cartridge to dispense the binary components from the opposite ends.

Squeezing the trigger lever 16 towards the handle causes the pawl teeth to ride forwards in engagement with the plunger ratchet teeth to drive the plunger forwards. Relieving the trigger returns the pawl teeth to the rear over the plunger ratchet teeth 84. Squeezing the trigger again advances the plungers forwards into the rear of the cartridges to dispense the viscous binary materials from the cartridge outlet.

Each ratio of cartridge barrels requires its own plunger with the plunger heads in alignment with the cartridge barrel pistons. However, all the plunges share the same spacing of webs 82 and the arrangement of plunger teeth 84.

Likewise, the breeches adapted for a different cartridge or set of cartridges share a common fixing arrangement for the stock. Therefore, the different cartridges are interchangeable in the same stock. This reduces the cost of the dispensing apparatus needed in comparison with the conventional use of separate guns for the different ratios.

It will be appreciated by the person of ordinary skill in the art that various modifications and variations can be made to disclosed embodiments. The invention is not limited specifically to the embodiments disclosed. The invention is limited only in respect of the spirit and scope of the accompanying claims.

## Claims

1. A dispensing gun for dispensing viscous materials, comprising:
a body;
a first holder for holding a cartridge of material in a dispensing relationship to the body, the holder being demountably secured to the body.

2. A dispensing gun as claimed in claim 1 in which the holder is moveable, while mounted in the body, between a closed position, aligning the cartridge in an operative position with respect to the body, and an open position for removal and/or insertion of the cartridge.

3. A dispensing gun as claimed in claim 2 in which the body includes a pair of spaced members having a retaining means engageable with the holder for demountably securing the holder to the body.

4. A dispensing gun as claimed in claim 3, including pivotable connecting means by which the holder is secured between the spaced members and is moveable between the closed and open positions.

5. A dispensing gun as claimed in claim 4 in which the pivotable connecting means comprise a main boss on each side of the holder which is arranged to engage a recess in each of the spaced members.

6. A dispensing gun as claimed in claim 5 in which each member defines a channel extending from the recess, by which channel the holder is mountable to and demountable from the body.

7. A dispensing gun as claimed in claim 6 in which the interface between the channel and the recess defines a ridge in the channel.

8. A dispensing gun as claimed in claim 7 in which the main boss is formed with a chamfer for enabling its engagement with the recess.

9. A dispensing gun as claimed in claim 7 or 8, including a further boss on each side of the cartridge which is arranged to swing about the axis of the pivotable connecting means as the holder is moved between the closed and open positions, the further boss being engageable with a surface of the channel in the open position to define a shifted pivot point, whereby rotation of the holder about the shifted pivot point disengages each main boss from its respective recess into the channel, whereby the holder is removable from the body.

10. A dispensing gun as claimed in claim 9 in which each main boss is formed with a further chamfer for enabling disengagement from the recess.

11. A dispensing gun as claimed in any of claims 1 to 10 in which the holder defines an aperture for receiving the cartridge, the holder further defining a surface for engaging a corresponding surface of the cartridge for holding the cartridge in the holder in the loaded position.

12. A dispensing gun as claimed claim 11 in which the surface of the holder comprises the surface defining the aperture.

13. A dispensing gun as claimed in claim 12 in which the surface defines a rear end of the aperture.

14. A dispensing gun as claimed in any of claims 1 to 10 in which the holder and the body include a cooperating detent and recess which engage to retain the holder in the closed position.

15. A set of parts including dispensing gun as claimed in any preceding claim in which a first holder is adapted for holding a double barrelled cartridge, each barrel having a rear end and an outlet end, the set further including a first double plunger arrangeable in relation to the body to be actuatable to engage the rear ends of the barrels to dispense viscous materials from the respective outlet ends.

16. A set of parts as claimed in claim 15, the first holder being adapted for a predetermined ratio or set of ratios of barrel sizes, the set further including a second holder adapted for another predetermined ratio or set of ratios of barrel sizes, which second holder is interchangeable with the first holder in the body of the dispensing gun.

17. A set of parts as claimed in claim 15 or 16 including a second double plunger which is interchangeable with the first double plunger each for a respective ratio of barrel sizes.

18. A dispensing gun as claimed in any one of claims 11 or 14 in which opposed lateral sides of the aperture are differently radiussed, one side being radiussed in conformity with a corresponding barrel of a first cartridge of a first barrel radius ratio, and the other side being radiussed in conformity with a corresponding barrel of a second cartridge of a second barrel radius ratio.

19. A dispensing gun assembly including a gun as claimed in any of claims 11 to 14 and a cartridge in which the lateral dimension of the cartridge across its barrel(s) is substantially the same as the corresponding lateral dimension of the aperture.
